# EUROPEAN PATENT SPECIFICATION

(11) **EP 4 398 272 B1**
(45) Date of publication and mention of the grant of the patent: **14.10.2026**
(21) Application number: 22863099.2
(22) Date of filing: 15.08.2022
(51) Int. Cl.: G01D 5/14, H01C 10/00, H01C 10/14

(54) **ELECTROMAGNETIC INDUCTION POTENTIOMETER**
ELEKTROMAGNETISCHES INDUKTIONSPOTENTIOMETER
POTENTIOMÈTRE À INDUCTION ÉLECTROMAGNÉTIQUE

(30) Priority: 31.08.2021 CN 202122094063 U
(43) Date of publication of application: 10.07.2024
(73) Proprietor: Shenzhen Guli Technology Co., Ltd., Shenzhen, Guangdong 518000 (CN)
(72) Inventor: YU, Hongyong, Shenzhen, Guangdong 518000 (CN)
(74) Representative: Metida
(86) International application number: PCT/CN2022/112429
(87) International publication number: WO 2023/029959

(56) References cited:
- CN-A- 102 496 433
- CN-A- 107 086 100
- CN-A- 107 086 100
- CN-U- 203 443 595
- CN-U- 210 156 311
- CN-U- 213 874 148
- CN-U- 215 815 437
- CN-Y- 200 996 830
- JP-A- H08 236 314
- US-A1- 2008 218 158
- US-A1- 2016 041 008
- US-B1- 7 352 174
- US-B2- 8 692 544

## Description

### TECHNICAL FIELD

The present disclosure relates to a field of electronic technology, and in particular to an electromagnetic induction potentiometer.

### BACKGROUND

A potentiometer is a variable resistor, which is generally composed of a resistor and a rotating system or a sliding system. The potentiometer obtains part of voltage output by movement of a movable contact on the resistor. A conventional potentiometer generally adopts a carbon film or a resistance wire structure, and the movable contact needs to contact the carbon film and rubbed with the carbon film to detect different positions of the potentiometer. A structure of the conventional potentiometer has many defects. For instance, the carbon film is easy to wear, has a short life, and has large production errors. Further, due to a friction of the movable contact, contact interference clutter is generated when a position of the movable contact changes. If the conventional potentiometer is applied to a speaker to adjust a volume, when adjusting the volume, the speaker generates a sizzling interference sound.

An electromagnetic induction potentiometer overcomes the above-mentioned defects of the conventional potentiometer. The electromagnetic induction potentiometer uses a permanent magnet as a rotating component or a sliding component, and uses a linear Hall sensor to detect a position of the permanent magnet in real time. When adjusting the position of the electromagnetic induction potentiometer, the linear Hall sensor and the permanent magnet do not contact each other, so the electromagnetic induction potentiometer is not worn and no contact interference clutter is generated.

Document US 8 692 544 B2 discloses a rotary encoder and the Chinese patent application number CN202110678873.8 proposes an adaptive full-stroke detection method for an electromagnetic induction potentiometer. In the adaptive full-stroke detection method, a permanent magnet is embedded in a rotor, which has the following defects. When the electromagnetic induction potentiometer is in working condition, the permanent magnet is easy to fall off from the rotor, affecting reliability of the electromagnetic induction potentiometer. During production and testing processes of the electromagnetic induction potentiometer, it is inconvenient to disassemble and assemble the permanent magnet.

Therefore, it is necessary to propose an electromagnetic induction potentiometer to solve above problems.

### SUMMARY

The invention is set out in the appended set of claims. In order to solve the above problems, the present disclosure proposes an electromagnetic induction potentiometer. Through arrangements of fasteners, a permanent magnet thereof is stably installed on a rotor, making the electromagnetic induction potentiometer easy to disassemble and assemble.

The present disclosure provides the electromagnetic induction potentiometer, including a housing, a rotor, a permanent magnet, and a magnetic induction module.

The housing defines a first cavity and a second cavity. The rotor is accommodated in the first cavity. The rotor is rotatable relative to the housing. The magnetic induction module is accommodated in the second cavity. The rotor comprises a through hole and fasteners. The through hole is configured to receive an external rotation input. The fasteners are configured to fix the permanent magnet on the rotor.

Optionally, two fasteners are provided. The two fasteners are respectively disposed on two sides of the permanent magnet. A support portion is disposed below the permanent magnet. An accommodating space for the permanent magnet is defined between the two fasteners and the support portion.

Optionally, a stroke groove is defined on the housing. Top portions of the two fasteners are accommodated in the stroke groove.

Optionally, the through hole is a rectangular through hole.

Optionally, a round through hole is defined on a middle portion of the first cavity of the housing. Claw locks are respectively arranged on two sides of the through hole of the rotor. The claw locks are snapped on an edge of the round through hole.

Optionally, an arc protrusion is arranged on a surface of the rotor close to an inner side of the housing.

Optionally, the magnetic induction module is packaged as an integrated circuit chip.

Optionally, notches are defined on a bottom portion of the second cavity of the housing.

Optionally, side clamping pieces are respectively arranged on two sides of the housing.

Through the arrangements of the fasteners, the permanent magnet is firmly installed on the rotor, preventing the permanent magnet from falling off the rotor when the electromagnetic induction potentiometer is in a work state, improving working stability of the electromagnetic induction potentiometer, and making the permanent magnet easy to disassemble and assemble during the production ad testing processes of the electromagnetic induction potentiometer.

### BRIEF DESCRIPTION OF DRAWINGS

FIG. 1 is a schematic diagram of an electromagnetic induction potentiometer according to one embodiment of the present disclosure.
FIG. 2 is an exploded schematic diagram of the electromagnetic induction potentiometer according to one embodiment of the present disclosure.
FIG. 3 is another exploded schematic diagram of the electromagnetic induction potentiometer according to one embodiment of the present disclosure.
FIG. 4 is a cross-sectional schematic diagram of the electromagnetic induction potentiometer taken along the line A-A shown in FIG. 1.
FIG. 5 is another exploded schematic diagram of the electromagnetic induction potentiometer according to one embodiment of the present disclosure.
FIG. 6 is a schematic diagram of an interior of a housing of the electromagnetic induction potentiometer according to one embodiment of the present disclosure.

### DETAILED DESCRIPTION

In order to illustrate technical solutions of the present disclosure clearly and completely, the present disclosure will be further described below in conjunction with the accompanying drawings.

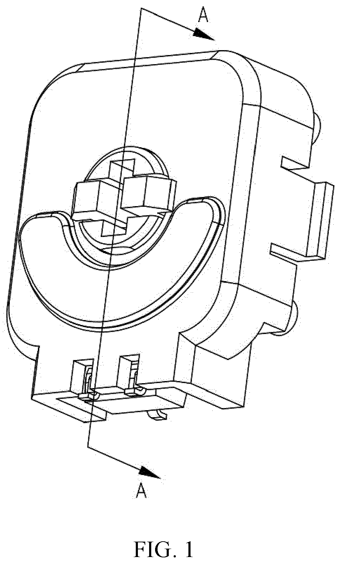

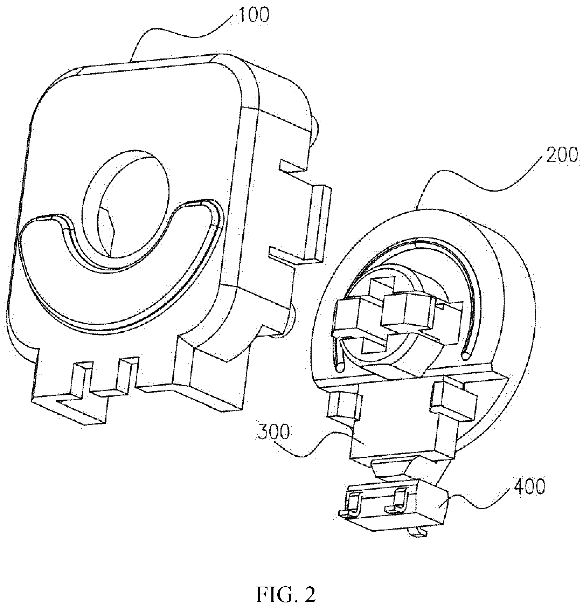

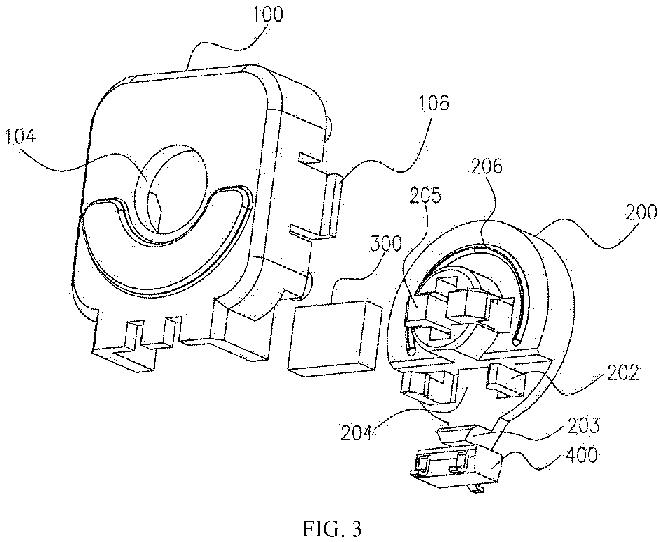

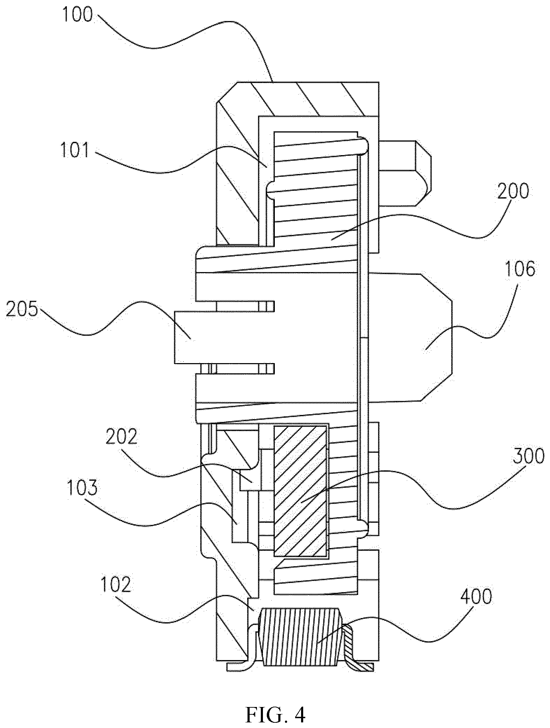

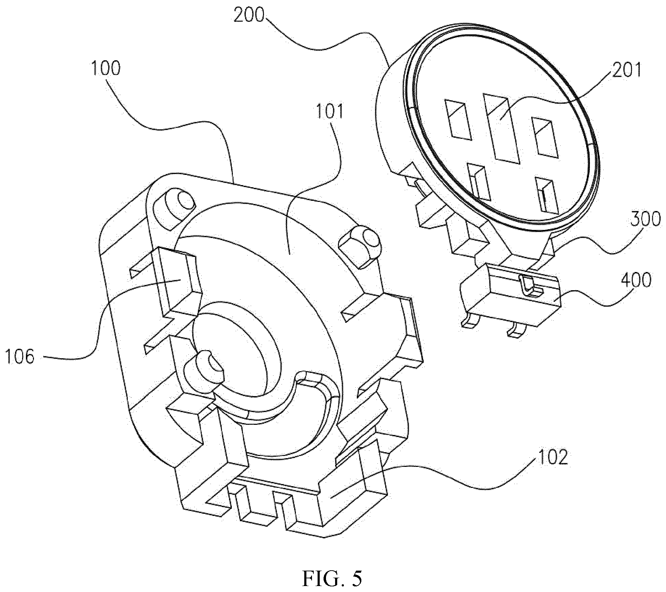

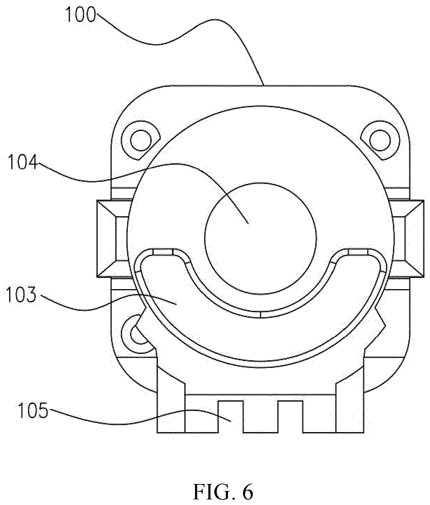

As shown in FIGS. 1-6, the present disclosure provides an electromagnetic induction potentiometer. The electromagnetic induction potentiometer comprises a housing 100, a rotor 200, a permanent magnet 300, and a magnetic induction module 400.

The housing 100 defines a first cavity 101 and a second cavity 102. The rotor 200 is accommodated in the first cavity 101. The rotor 200 is rotatable relative to the housing 100. The magnetic induction module 400 is accommodated in the second cavity 102. The rotor 200 comprises a through hole 201 and fasteners 202. The through hole 201 is configured to receive an external rotation input. The fasteners 202 are configured to fix the permanent magnet 300 on the rotor 100.

In the embodiment of the present disclosure, a rotating output shaft of an external device is inserted into the through hole 201. The external device rotates to drive the rotor 200 to rotate. The permanent magnet 300 rotates with the rotor 200. The magnetic induction module 400 senses position change of the permanent magnet 300 and outputs signals. The signals reflect a rotation of the external device. In one optional embodiment, the external device is a rocker mechanism or a knob.

Through arrangements of the fasteners 202, the permanent magnet 300 is firmly installed on the rotor 200, preventing the permanent magnet 300 from falling off the rotor 200 when the electromagnetic induction potentiometer is in a work state, improving working stability of the electromagnetic induction potentiometer, and making the permanent magnet 300 easy to disassemble and assemble during the production ad testing processes of the electromagnetic induction potentiometer.

In one optional embodiment, two fasteners 202 are provided. The two fasteners 202 are respectively disposed on two sides of the permanent magnet 300. A support portion 203 is disposed below the permanent magnet. An accommodating space 204 for the permanent magnet 300 is defined between the two fasteners 202 and the support portion 203.

In one optional embodiment, a stroke groove 103 is defined on the housing 100. Top portions of the two fasteners 202 are accommodated in the stroke groove 103.

In one optional embodiment, the through hole 201 is a rectangular through hole.

In one optional embodiment, a round through hole 104 is defined on a middle portion of the first cavity 101 of the housing 100. Claw locks 205 are respectively arranged on two sides of the through hole 201 of the rotor 200. The claw locks 205 are snapped on an edge of the round through hole 104. Therefore, the rotor 200 is rotatably accommodated in the first cavity 101 of the housing 100, and the rotor 200 is prevented from falling off from the housing 100.

In one optional embodiment, an arc protrusion 206 is arranged on a surface of the rotor 200 close to an inner side of the housing 100. An arrangement of the arc protrusion 206 reduces a friction between the rotor 200 and the housing 100 when the electromagnetic induction potentiometer is in the working state.

In one optional embodiment, the magnetic induction module 400 is packaged as an integrated circuit chip.

In one optional embodiment, notches 105 are defined on a bottom portion of the second cavity 102 of the housing 100. The notches 105 are configured to accommodate pins of the magnetic induction module 400 packaged as the integrated circuit chip. In practical applications, the magnetic induction module 400 packaged as the integrated circuit chip is welded on a circuit board, and a combined component composed of the housing 100, the rotor 200, and the permanent magnet 300 is fixed above the magnetic induction module 400.

In one optional embodiment, when the electromagnetic induction potentiometer is applied in the rocker mechanism, side clamping pieces 106 are respectively arranged on two sides of the housing 100. The housing 100 is fixed to two sides of the rocker mechanism through the side clamping pieces 106. A rotating output shaft of the rocker mechanism is inserted into the through hole 201. The magnetic induction module 400 packaged as the integrated circuit chip is welded to a circuit board arranged below the housing 100.

Of course, the present disclosure can also have various other embodiments. Based on the embodiments, other embodiments obtained by those of ordinary skill in the art without any creative work fall within the protection scope of the present disclosure.

## Claims

1. An electromagnetic induction potentiometer configured for use in a rocker mechanism, comprising:
a housing (100), a rotor (200), a permanent magnet (300), and a magnetic induction module (400);
wherein the housing (100), having side clamping pieces (106) respectively disposed on opposite sides thereof, is configured to be fixed to the rocker mechanism through the side clamping pieces (106), and defines a first cavity (101) and a second cavity (102), and defines notches (105) on a bottom portion of the second cavity (102), the notches (105) being configured to accommodate pins of the magnetic induction module (400);
wherein the rotor (200), accommodated in the first cavity (101) and rotatable relative to the housing (100), comprises a through hole (201) and fasteners (202), the through hole (201) being configured to connect with a rotating output shaft of the rocker mechanism, and the fasteners (202) being configured to fix the permanent magnet (300) on the rotor (200);-and
wherein the magnetic induction module (400), accommodated in the second cavity (102) and packaged as an integrated circuit chip, is configured to be welded on a circuit board below the housing (100); and
wherein an arc protrusion (206) is arranged on a surface of the rotor (200) close to an inner side of the housing (100).

2. The electromagnetic induction potentiometer of claim 1, wherein two fasteners (202) are provided; the two fasteners (202) are respectively disposed on two sides of the permanent magnet (300); a support portion (203) is disposed below the permanent magnet (300); an accommodating space (204) for the permanent magnet (300) is defined between the two fasteners and the support portion (203).

3. The electromagnetic induction potentiometer of claim 2, wherein a stroke groove (103) is defined on the housing (100); top portions of the two fasteners are accommodated in the stroke groove (103).

4. The electromagnetic induction potentiometer of claim 1, wherein the through hole (201) is a rectangular through hole.

5. The electromagnetic induction potentiometer of claim 1, wherein a round through hole (104) is defined on a middle portion of the first cavity (101) of the housing (100); claw locks (205) are respectively arranged on two sides of the through hole (201) of the rotor (200); and the claw locks (205) are snapped on an edge of the round through hole.

6. The electromagnetic induction potentiometer of claim 1, wherein the rotor (200) comprises two fasteners (202); the two fasteners (202) are respectively disposed on two sides of the permanent magnet (300); a support portion (203) is disposed below the permanent magnet (300); an accommodating space (204) for the permanent magnet (300) is defined between the two fasteners and the support portion (203); and
wherein a stroke groove (103) is defined on the housing (100); top portions of the two fasteners are accommodated in the stroke groove (103); the through hole (201) is a rectangular through hole; a round through hole (104) is defined on a middle portion of the first cavity (101) of the housing (100); claw locks (205) are respectively arranged on two sides of the through hole (201) of the rotor (200); and the claw locks (205) are snapped on an edge of the round through hole (104).

## Patentansprüche

1. Ein elektromagnetisches Induktionspotentiometer, das zur Verwendung in einem Wippmechanismus konfiguriert ist, umfassend:
ein Gehäuse (100), einen Rotor (200), einen Permanentmagneten (300) und ein magnetisches Induktionsmodul (400);
wobei das Gehäuse (100), das seitliche Klemmstücke (106) aufweist, die jeweils an dessen gegenüberliegenden Seiten angeordnet sind, so konfiguriert ist, dass es durch die seitlichen Klemmstücke (106) an dem Wippmechanismus befestigt wird, und einen ersten Hohlraum (101) und einen zweiten Hohlraum (102) definiert, und Aussparungen (105) an einem unteren Abschnitt des zweiten Hohlraums (102) definiert, wobei die Aussparungen (105) so konfiguriert sind, dass sie Stifte des magnetischen Induktionsmoduls (400) aufnehmen;
wobei der Rotor (200), der in dem ersten Hohlraum (101) untergebracht und relativ zum Gehäuse (100) drehbar ist, ein Durchgangsloch (201) und Befestigungselemente (202) umfasst, wobei das Durchgangsloch (201) so konfiguriert ist, dass es mit einer rotierenden Ausgangswelle des Wippmechanismus verbunden wird, und die Befestigungselemente (202) so konfiguriert sind, dass sie den Permanentmagneten (300) am Rotor (200) befestigen;
wobei das magnetische Induktionsmodul (400), das im zweiten Hohlraum (102) untergebracht und als integrierter Schaltungschip verpackt ist, so konfiguriert ist, dass es auf einer Leiterplatte unter dem Gehäuse (100) verlötet wird; und
wobei ein Bogenvorsprung (206) auf einer Oberfläche des Rotors (200) nahe einer Innenseite des Gehäuses (100) angeordnet ist.

2. Das elektromagnetische Induktionspotentiometer nach Anspruch 1, wobei zwei Befestigungselemente (202) bereitgestellt sind; die zwei Befestigungselemente (202) jeweils an zwei Seiten des Permanentmagneten (300) angeordnet sind; ein Stützabschnitt (203) unter dem Permanentmagneten (300) angeordnet ist; ein Aufnahmeraum (204) für den Permanentmagneten (300) zwischen den beiden Befestigungselementen und dem Stützabschnitt (203) definiert ist.

3. Das elektromagnetische Induktionspotentiometer nach Anspruch 2, wobei eine Hubnut (103) am Gehäuse (100) definiert ist; obere Abschnitte der zwei Befestigungselemente in der Hubnut (103) untergebracht sind.

4. Das elektromagnetische Induktionspotentiometer nach Anspruch 1, wobei das Durchgangsloch (201) ein rechteckiges Durchgangsloch ist.

5. Das elektromagnetische Induktionspotentiometer nach Anspruch 1, wobei ein rundes Durchgangsloch (104) in einem mittleren Abschnitt des ersten Hohlraums (101) des Gehäuses (100) definiert ist; Klauenverschlüsse (205) jeweils an zwei Seiten des Durchgangslochs (201) des Rotors (200) angeordnet sind; und die Klauenverschlüsse (205) an einer Kante des runden Durchgangslochs eingeschnappt sind.

6. Das elektromagnetische Induktionspotentiometer nach Anspruch 1,
wobei der Rotor (200) zwei Befestigungselemente (202) umfasst; die zwei Befestigungselemente (202) jeweils an zwei Seiten des Permanentmagneten (300) angeordnet sind; ein Stützabschnitt (203) unter dem Permanentmagneten (300) angeordnet ist; ein Aufnahmeraum (204) für den Permanentmagneten (300) zwischen den zwei Befestigungselementen und dem Stützabschnitt (203) definiert ist; und
wobei eine Hubnut (103) am Gehäuse (100) definiert ist; obere Abschnitte der zwei Befestigungselemente in der Hubnut (103) untergebracht sind; das Durchgangsloch (201) ein rechteckiges Durchgangsloch ist; ein rundes Durchgangsloch (104) an einem mittleren Abschnitt des ersten Hohlraums (101) des Gehäuses (100) definiert ist; Klauenverschlüsse (205) jeweils an zwei Seiten des Durchgangslochs (201) des Rotors (200) angeordnet sind; und die Klauenverschlüsse (205) an einer Kante des runden Durchgangslochs (104) eingeschnappt sind.

## Revendications

1. Un potentiomètre à induction électromagnétique configuré pour être utilisé dans un mécanisme de bascule, comprenant:
un boîtier (100), un rotor (200), un aimant permanent (300) et un module d'induction magnétique (400);
dans lequel le boîtier (100), ayant des pièces de serrage latérales (106) disposées respectivement sur des côtés opposés de celui-ci, est configuré pour être fixé au mécanisme de bascule par l'intermédiaire des pièces de serrage latérales (106), et définit une première cavité (101) et une seconde cavité (102), et définit des encoches (105) sur une partie inférieure de la seconde cavité (102), les encoches (105) étant configurées pour loger des broches du module d'induction magnétique (400);
dans lequel le rotor (200), logé dans la première cavité (101) et rotatif par rapport au boîtier (100), comprend un trou traversant (201) et des éléments de fixation (202), le trou traversant (201) étant configuré pour se connecter à un arbre de sortie rotatif du mécanisme de bascule, et les éléments de fixation (202) étant configurés pour fixer l'aimant permanent (300) sur le rotor (200);
dans lequel le module d'induction magnétique (400), logé dans la seconde cavité (102) et conditionné sous forme de puce de circuit intégré, est configuré pour être soudé sur une carte de circuit imprimé sous le boîtier (100); et
dans lequel une saillie en arc (206) est agencée sur une surface du rotor (200) à proximité d'un côté intérieur du boîtier (100).

2. Le potentiomètre à induction électromagnétique selon la revendication 1, dans lequel deux éléments de fixation (202) sont prévus; les deux éléments de fixation (202) sont respectivement disposés sur deux côtés de l'aimant permanent (300); une partie de support (203) est disposée sous l'aimant permanent (300); un espace de logement (204) pour l'aimant permanent (300) est défini entre les deux éléments de fixation et la partie de support (203).

3. Le potentiomètre à induction électromagnétique selon la revendication 2, dans lequel une rainure de course (103) est définie sur le boîtier (100); des parties supérieures des deux éléments de fixation sont logées dans la rainure de course (103).

4. Le potentiomètre à induction électromagnétique selon la revendication 1, dans lequel le trou traversant (201) est un trou traversant rectangulaire.

5. Le potentiomètre à induction électromagnétique selon la revendication 1, dans lequel un trou traversant rond (104) est défini sur une partie médiane de la première cavité (101) du boîtier (100); des verrous à griffes (205) sont respectivement agencés sur deux côtés du trou traversant (201) du rotor (200); et les verrous à griffes (205) sont encliquetés sur un bord du trou traversant rond.

6. Le potentiomètre à induction électromagnétique selon la revendication 1,
dans lequel le rotor (200) comprend deux éléments de fixation (202); les deux éléments de fixation (202) sont respectivement disposés sur deux côtés de l'aimant permanent (300); une partie de support (203) est disposée sous l'aimant permanent (300); un espace de logement (204) pour l'aimant permanent (300) est défini entre les deux éléments de fixation et la partie de support (203); et
dans lequel une rainure de course (103) est définie sur le boîtier (100); des parties supérieures des deux éléments de fixation sont logées dans la rainure de course (103); le trou traversant (201) est un trou traversant rectangulaire; un trou traversant rond (104) est défini sur une partie médiane de la première cavité (101) du boîtier (100); des verrous à griffes (205) sont respectivement agencés sur deux côtés du trou traversant (201) du rotor (200); et les verrous à griffes (205) sont encliquetés sur un bord du trou traversant rond (104).
